# FASCICULE DE BREVET EUROPEEN

(11) **EP 2 904 137 B1**
(45) Date de publication et mention de la délivrance du brevet: **01.08.2018**
(21) Numéro de dépôt: 13782788.7
(22) Date de dépôt: 03.10.2013
(51) Int. Cl.: D04H 1/4226, B32B 17/02, E04B 1/76, D04H 1/74

(54) **INSTALLATION ET PROCÉDÉ POUR FABRIQUER UN PRODUIT D'ISOLATION THERMIQUE ET/OU PHONIQUE**
ANLAGE UND VERFAHREN ZUR HERSTELLUNG EINES WÄRME- UND/ODER SCHALLISOLIERUNGSPRODUKTS
INSTALLATION AND METHOD FOR MANUFACTURING A THERMAL AND/OR ACOUSTIC INSULATION PRODUCT

(30) Priorité: 04.10.2012 FR 1259410
(43) Date de publication de la demande: 12.08.2015
(73) Titulaire: Saint-Gobain Isover, 92400 Courbevoie (FR)
(72) Inventeur: SANTAMARIA, Romain, F-60200 Compiegne (FR); KONTTILA, Hannu, FI-05801 Hyvinkaa (FI)
(74) Mandataire: Saint-Gobain Recherche
(86) Numéro de dépôt international: PCT/FR2013/052352
(87) Numéro de publication internationale: WO 2014/053778

(56) Documents cités:
- EP-A1- 1 236 818
- WO-A1-94/16162
- WO-A1-97/32069
- WO-A1-99/51535
- WO-A1-2009/024396
- WO-A2-02/059405
- US-A- 3 477 103
- US-A- 5 065 478

## Description

L'invention concerne une installation et un procédé pour fabriquer un produit d'isolation thermique et/ou phonique, à base de fibres minérales.

Il est connu de fabriquer des produits d'isolation à base de fibres minérales, tels que des panneaux de laine minérale, par exemple par centrifugation interne de verre fondu. Toutefois, l'épaisseur d'un tel produit d'isolation thermique et/ou phonique est limitée par le diamètre moyen des fibres et le grammage que l'on peut obtenir sur une ligne de fabrication de fibres minérales, ce qui va limiter les propriétés d'isolation thermique et/ou phonique, qui sont directement liées au grammage. Le grammage est limité par l'aspiration créée sous le tapis de réception des fibres minérales.

Il y a donc un besoin pour une installation et un procédé pour fabriquer un produit d'isolation thermique et/ou phonique qui permette d'améliorer ses propriétés thermiques et/ou acoustiques.

Pour cela, l'invention propose une installation pour fabriquer un produit d'isolation thermique et/ou phonique à base de laine minérale comprenant :
- une première ligne de production de premières fibres minérales, comprenant au moins un organe de fibrage,
- une deuxième ligne de production de deuxièmes fibres minérales, comprenant au moins un organe de fibrage et un nappeur,
- le nappeur étant présent uniquement sur la deuxième ligne de production et étant adapté à déposer par nappage les deuxièmes fibres minérales sur les premières fibres minérales.

Selon une autre particularité, la première ligne de production et/ou la deuxième ligne de production comprennent chacune au moins deux organes de fibrage, les différents organes de chaque ligne de production étant disposés en série.

Selon une autre particularité, l'installation comprend en outre une crêpeuse entre le ou les organes de fibrage de la première ligne de production et le nappeur, adaptée à crêper les premières fibres minérales avant qu'elles soient surmontées des deuxièmes fibres minérales, et/ou en aval du nappeur, adaptée à crêper les premières fibres minérales surmontées des deuxièmes fibres minérales.

Selon une autre particularité, l'installation comprend en outre une étuve adaptée à recevoir les premières fibres minérales surmontées des deuxièmes fibres minérales.

Selon une autre particularité, chaque organe de fibrage d'au moins une des lignes de production comprend :
- une assiette de centrifugation interne adaptée à tourner autour de son axe de symétrie, sensiblement vertical, et dont la bande périphérique est percée d'une pluralité d'orifices,
- un brûleur annulaire adapté à réaliser un étirage gazeux à haute température à la sortie des orifices de l'assiette de centrifugation,
- de façon optionnelle, une couronne de soufflage adaptée à canaliser les fibres vers un premier ou deuxième tapis de convoyage,
- de façon optionnelle, une couronne d'encollage par pulvérisation adaptée à pulvériser une composition d'encollage sur les fibres avant qu'elles atteignent le premier ou deuxième tapis de convoyage.

Selon une autre particularité, le nappeur est un nappeur vertical ou horizontal.

Selon une autre particularité, les première et deuxième lignes de production sont sensiblement perpendiculaires l'une à l'autre.

L'invention concerne également un procédé de fabrication d'un produit d'isolation thermique et/ou phonique à base de laine minérale, comprenant les étapes suivantes :
- fabrication de premières fibres minérales sur une première ligne de production par au moins un organe de fibrage,
- fabrication de deuxièmes fibres minérales sur une deuxième ligne de production par au moins un organe de fibrage,
- passage des deuxièmes fibres minérales dans un nappeur, qui est présent uniquement sur la deuxième ligne de production,
- dépôt par nappage des deuxièmes fibres minérales par le nappeur sur les premières fibres minérales.

Selon une autre particularité, le procédé comprend en outre une étape de passage dans une crêpeuse des premières fibres minérales seules et/ou des premières fibres minérales surmontées des deuxièmes fibres minérales.

Selon une autre particularité, le procédé comprend en outre une étape de passage des premières fibres minérales surmontées des deuxièmes fibres minérales dans une étuve.

D'autres caractéristiques et avantages de l'invention vont à présent être décrits en regard des dessins sur lesquels :
- La figure 1 représente une vue en perspective d'une installation selon l'invention pour fabriquer un produit d'isolation thermique et/ou phonique ;
- Les figures 2 et 3 sont des vues de côté de l'installation selon la figure 1 ;
- La figure 4 est une vue de côté d'un nappeur horizontal.

Les numéros de référence qui sont identiques sur les différentes figures représentent des éléments similaires ou identiques.

L'invention se rapporte à une installation pour fabriquer un produit d'isolation thermique et/ou phonique à base de laine minérale. L'installation comprend une première ligne de production de premières fibres minérales. Cette première ligne de production comprend au moins un organe de fibrage. L'installation comprend également une deuxième ligne de production de deuxièmes fibres minérales. Cette deuxième ligne comprend au moins un organe de fibrage et un nappeur. Le nappeur est adapté à déposer par nappage les deuxièmes fibres minérales sur les premières fibres minérales.

Ainsi, l'épaisseur du produit isolant peut être augmentée tout en conservant un diamètre moyen de fibres (ou micronaire) et un grammage techniquement réalisables, ce qui va permettre d'améliorer les propriétés thermiques et/ou acoustiques du produit sans changer son diamètre moyen de fibres et son grammage.

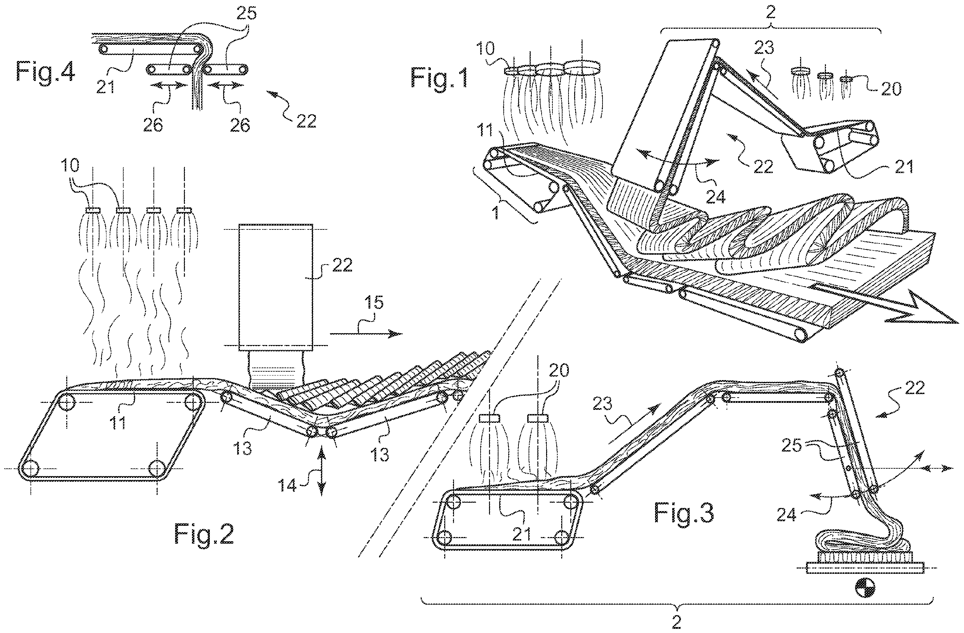

La figure 1 représente une vue en perspective d'une installation selon l'invention pour fabriquer un produit d'isolation thermique et/ou phonique. Les figures 2 et 3 sont des vues de côté de l'installation selon la figure 1.

L'installation comprend une première ligne 1 de production de premières fibres minérales. Cette première ligne 1 de production comprend au moins un organe 10 de fibrage. De préférence, la première ligne 1 de production comprend une pluralité d'organes 10 de fibrage, disposés en série sur une même ligne de façon à produire une plus grande quantité de fibres minérales. De façon encore plus préférée, la première ligne 1 de production comprend au maximum dix organes 10 de fibrage, par exemple huit organes 10 de fibrage. Un tel nombre d'organes 10 permet ainsi de fabriquer une première couche de fibres minérales de grammage compris entre 500 et 8000 g/m², de préférence entre 3000 et 5500 g/m², de façon encore plus préférée entre 3000 et 4000 g/m².

Le fibrage est par exemple réalisé par centrifugation interne. Dans ce cas-là, chaque organe 10 de fibrage comprend une assiette de centrifugation interne adaptée à tourner autour de son axe de symétrie, sensiblement vertical. La bande périphérique de l'assiette de centrifugation interne est percée d'une pluralité d'orifices, par lesquels sortent des filaments de verre fondu. Chaque organe 10 de fibrage par centrifugation interne comprend également un brûleur annulaire adapté à réaliser un étirage gazeux à haute température des filaments à la sortie des orifices de l'assiette de centrifugation interne pour étirer les filaments en fibres minérales. Chaque organe 10 de fibrage par centrifugation interne peut également comprendre une couronne de soufflage adaptée à canaliser les fibres vers un premier tapis 11 de convoyage des fibres minérales. Chaque organe 10 de fibrage par centrifugation interne peut également comprendre une couronne d'encollage par pulvérisation adaptée à pulvériser une composition d'encollage sur les fibres avant qu'elles atteignent le premier tapis de convoyage 11. Différentes grandeurs, tels que la pression et la température du brûleur annulaire, le diamètre des assiettes de centrifugation interne, la présence ou non d'une couronne de soufflage d'air, la pression de soufflage d'air, ou encore la composition du verre fondu, peuvent être ajustées pour obtenir des fibres minérales ayant un diamètre moyen de fibres et un grammage tels que désirés.

L'ensemble des premières fibres minérales produites par les différents organes 10 de fibrage de la première ligne 1 de production atterrit sur le premier tapis de convoyage 11 qui défile à une vitesse comprise entre 3 et 100 m/min, de préférence entre 3 et 20 m/min. Les premières fibres minérales forment alors une première couche de fibres minérales. Sous le tapis de convoyage, des aspirateurs permettent d'aspirer une partie de l'air contenu dans la première couche de fibres de façon à densifier la couche.

L'installation comprend également une deuxième ligne 2 de production de deuxièmes fibres minérales. Cette deuxième ligne 2 de production comprend au moins un organe 20 de fibrage. De préférence, la deuxième ligne 2 de production comprend une pluralité d'organes 20 de fibrage, disposés en série sur une même ligne de façon à produire une plus grande quantité de fibres minérales. De façon encore plus préférée, la deuxième ligne 2 de production comprend par exemple trois organes 20 de fibrage. Les organes 20 de fibrage sont par exemple du même type que ceux de la première ligne 1 de production. Les différentes grandeurs ajustables peuvent être choisies différemment sur les deux lignes 1, 2 de production. Ainsi, les deuxièmes fibres minérales peuvent être différentes des premières fibres minérales. La différence peut porter sur la composition du verre, la présence ou non de liant, les caractéristiques des fibres dues aux paramètres de fibrage. Ainsi, le diamètre moyen des fibres et le grammage peuvent être différents entre les premières fibres et les deuxièmes fibres.

L'ensemble des deuxièmes fibres minérales produites par les différents organes 20 de fibrage de la deuxième ligne 2 de production atterrit sur un deuxième tapis de convoyage 21 qui défile à une vitesse comprise entre 10 et 200 m/min, de préférence entre 10 et 120 m/min. Les deuxièmes fibres minérales forment alors une deuxième couche de fibres minérales. Sous le tapis de convoyage, des aspirateurs permettent d'aspirer une partie de l'air contenu dans la deuxième couche de fibres de façon à densifier la couche.

La deuxième ligne 2 de production comprend également un nappeur 22 disposé en aval des organes 20 de fibrage. Le nappeur 22 est adapté à déposer les deuxièmes fibres minérales produites sur la deuxième ligne 2 de production, par-dessus la première couche, constituée des premières fibres minérales produites sur la première ligne 1 de production. Les deuxièmes fibres minérales sont déposées sous forme de plusieurs couches superposées, de préférence entre trois et neuf couches.

Le grammage des deuxièmes fibres minérales avant nappage est compris entre 100 et 1000 g/m², de préférence entre 400 et 600 g/m².

Plus la première ligne 1 a une forte tirée, plus le grammage du produit d'isolation constitué d'une couche de premières fibres minérales surmontée de couches superposées de deuxièmes fibres minérales nappées, a un grammage faible. Le grammage d'un tel produit est compris entre 3000g/m² et 16000 g/m², par exemple environ 8300g/m² (pour un micronaire de 9 L/min). Un tel produit d'isolation a une épaisseur d'environ 300 mm et une conductivité thermique d'environ 32 mW/m.K.

Cela permet d'augmenter l'épaisseur de la couche de premières fibres minérales en y ajoutant une pluralité de couches de deuxièmes fibres minérales, ce qui permet d'avoir un produit d'isolation avec des propriétés thermiques et/ou acoustiques améliorées.

Comme représenté sur les figures 1 et 3 par la flèche 23, le deuxième tapis 21 de convoyage peut monter, entre les organes de fibrage 20 et le nappeur 22.

Le nappeur 22 est par exemple vertical, comme représenté sur les figures 1 à 3, ou horizontal, comme représenté sur la figure 4.

Le nappeur 22 vertical comprend deux tapis 25 avec des surfaces principales, destinées à être en contact avec les deuxièmes fibres minérales, qui sont parallèles et se font face. Les deux tapis 25 se déplacent à la même vitesse et entraînent les deuxièmes fibres minérales entre eux, contre leurs surfaces principales. Les deux tapis 25 oscillent ensemble autour d'un axe horizontal parallèle à leurs surfaces principales, comme illustré par la flèche 24 sur les figures 1 et 3.

Le nappeur 22 horizontal comprend deux tapis 25 avec des surfaces principales qui sont parallèles et situées dans un même plan horizontal. Les deux tapis 25 se déplacent en translation horizontale (flèches 26), à la même vitesse et dans la même direction, simultanément, entraînant les deuxièmes fibres minérales à passer entre leurs bords se faisant face.

De préférence, le nappeur 22, vertical ou horizontal, dépose les deuxièmes fibres minérales selon une direction faisant un angle non nul par rapport au premier tapis 11 de convoyage des premières fibres minérales. De préférence, cet angle est d'environ 90°. Ainsi, en fonction des vitesses respectives du premier tapis 11 de convoyage et du nappeur 22 (vitesse d'oscillation et vitesse des tapis 25 du nappeur vertical ou vitesse de translation et vitesse des tapis 25 du nappeur horizontal), le nombre de couches de deuxièmes fibres minérales peut être plus ou moins important, entraînant une épaisseur totale de deuxièmes fibres minérales variable en fonction des paramètres de fonctionnement.

Ainsi, par exemple, pour une vitesse de convoyage de 3,5 m/min sur la première ligne 1 de production, on peut obtenir une couche de première fibres minérales de grammage 4200 g/m². Pour une vitesse de convoyage de 44,9 m/min sur la deuxième ligne 2 de production, et une fréquence d'oscillation de 8,65 cycles par minute, on peut obtenir six couches de deuxièmes fibres minérales de grammage 619 g/m² chacune. Le grammage total du produit d'isolation final est alors de 7200 g/m².

Comme on peut le voir sur les figures 1 à 3, le premier tapis 11 de convoyage devient un tapis 13 de convoyage commun aux deux lignes 1, 2 de production une fois que les deuxièmes fibres minérales ont été déposées sur les premières fibres minérales. Au moins une partie du tapis 13 de convoyage commun peut être ajusté en hauteur, comme illustré par la flèche 14. La flèche 15 montre la direction d'avancée du tapis 13 de convoyage commun.

L'installation comprend de préférence également une crêpeuse qui permet d'augmenter la densité des fibres minérales. La crêpeuse est positionnée sur la première ligne de production, entre les organes 10 de fibrage et le nappeur 22, pour crêper la couche des premières fibres minérales avant que les deuxièmes fibres minérales soient déposées dessus, et/ou en aval du nappeur 22, pour crêper l'ensemble constitué des premières fibres minérales surmontées des deuxièmes fibres minérales. Une crêpeuse comprend deux tapis avec des surfaces principales, destinées à être en contact avec les fibres minérales, qui sont parallèles et se font face. Les deux tapis se déplacent à des vitesses différentes et entraînent les deuxièmes fibres minérales entre eux, contre leurs surfaces principales.

L'installation comprend également une étuve si les fibres minérales ont été encollées sur les lignes de production. L'étuve est située sur le tapis 13 de convoyage commun, en aval du nappeur 22 et en aval de la crêpeuse dans le cas où l'installation comprend une crêpeuse an aval du nappeur 22. L'étuve permet de faire polymériser la composition d'encollage pour donner une cohésion aux fibres. L'avantage de passer dans l'étuve l'ensemble constitué des premières et deuxièmes fibres minérales superposées permet d'avoir une très bonne cohésion de l'ensemble des fibres du produit d'isolation, même si les fibres proviennent de deux lignes de production distinctes à la base.

L'invention concerne également le procédé de fabrication du produit d'isolation thermique et/ou phonique à base de laine minérale à l'aide de l'installation selon l'invention. Le procédé comprend les étapes suivantes :
- fabrication des premières fibres minérales sur la première ligne de production 1 par au moins un organe 10 de fibrage,
- fabrication des deuxièmes fibres minérales sur la deuxième ligne 2 de production par au moins un organe 20 de fibrage,
- passage des deuxièmes fibres minérales dans le nappeur 22,
- dépôt par nappage des deuxièmes fibres minérales par le nappeur 22 sur les premières fibres minérales.

Le procédé comprend en outre, de façon optionnelle, une étape de passage des fibres minérales dans une crêpeuse et/ou dans une étuve.

## Revendications

1. Installation pour fabriquer un produit d'isolation thermique et/ou phonique à base de laine minérale comprenant :
- une première ligne (1) de production de premières fibres minérales, comprenant au moins un organe (10) de fibrage,
- une deuxième ligne (2) de production de deuxièmes fibres minérales, comprenant au moins un organe (20) de fibrage et un nappeur (22),
le nappeur (22) étant présent uniquement sur la deuxième ligne(2) de production et étant adapté à déposer par nappage les deuxièmes fibres minérales sur les premières fibres minérales.

2. Installation selon la revendication 1, dans laquelle la première ligne (1) de production et/ou la deuxième ligne (2) de production comprennent chacune au moins deux organes (10, 20) de fibrage, les différents organes (10, 20) de chaque ligne (1, 2) de production étant disposés en série.

3. Installation selon la revendication 1 ou 2, comprenant en outre une crêpeuse entre le ou les organes (10) de fibrage de la première ligne de production et le nappeur (22), adaptée à crêper les premières fibres minérales avant qu'elles soient surmontées des deuxièmes fibres minérales, et/ou en aval du nappeur (22), adaptée à crêper les premières fibres minérales surmontées des deuxièmes fibres minérales.

4. Installation selon l'une des revendications 1 à 3, comprenant en outre une étuve adaptée à recevoir les premières fibres minérales surmontées des deuxièmes fibres minérales.

5. Installation selon l'une des revendications 1 à 4, dans laquelle chaque organe (10, 20) de fibrage d'au moins une des lignes (1, 2) de production comprend :
- une assiette de centrifugation interne adaptée à tourner autour de son axe de symétrie, sensiblement vertical, et dont la bande périphérique est percée d'une pluralité d'orifices,
- un brûleur annulaire adapté à réaliser un étirage gazeux à haute température à la sortie des orifices de l'assiette de centrifugation,
- de façon optionnelle, une couronne de soufflage adaptée à canaliser les fibres vers un premier ou deuxième tapis de convoyage (11, 21),
- de façon optionnelle, une couronne d'encollage par pulvérisation adaptée à pulvériser une composition d'encollage sur les fibres avant qu'elles atteignent le premier ou deuxième tapis de convoyage (11, 21).

6. Installation selon l'une des revendications 1 à 5, dans laquelle le nappeur (22) est un nappeur vertical ou horizontal.

7. Installation selon l'une des revendications 1 à 6, dans lequel les première et deuxième lignes (1, 2) de production sont sensiblement perpendiculaires l'une à l'autre.

8. Procédé de fabrication d'un produit d'isolation thermique et/ou phonique à base de laine minérale, comprenant les étapes suivantes :
- fabrication de premières fibres minérales sur une première ligne (1) de production par au moins un organe (10) de fibrage,
- fabrication de deuxièmes fibres minérales sur une deuxième ligne (2) de production par au moins un organe (20) de fibrage,
- passage des deuxièmes fibres minérales dans un nappeur (22), qui est présent uniquement sur la deuxième ligne (2) de production,
- dépôt par nappage des deuxièmes fibres minérales par le nappeur (22) sur les premières fibres minérales.

9. Procédé selon la revendication 8, comprenant en outre une étape de passage dans une crêpeuse des premières fibres minérales seules et/ou des premières fibres minérales surmontées des deuxièmes fibres minérales.

10. Procédé selon la revendication 8 ou 9, comprenant en outre une étape de passage des premières fibres minérales surmontées des deuxièmes fibres minérales dans une étuve.

## Patentansprüche

1. Anlage zum Herstellen eines Wärme- und/oder Schallisolierungsprodukts auf Mineralwollebasis, die Folgendes umfasst:
- eine erste Produktionslinie (1) erster Mineralfasern, die mindestens ein Zerfaserungselement (10) umfasst,
- eine zweite Produktionslinie (2) zweiter Mineralfasern, die mindestens ein Zerfaserungselement (20) und eine Pendelablage (22) umfasst,
wobei die Pendelablage (22) nur auf der zweiten Produktionslinie (2) vorhanden und angepasst ist, um durch Legen die zweiten Mineralfasern auf den ersten Mineralfasern abzulegen.

2. Anlage nach Anspruch 1, wobei die erste Produktionslinie (1) und/oder die zweite Produktionslinie (2) jeweils mindestens zwei Zerfaserungselemente (10, 20) umfassen, wobei die unterschiedlichen Elemente (10, 20) jeder Produktionslinie (1, 2) in Reihe angeordnet sind.

3. Anlage nach Anspruch 1 oder 2, die außerdem eine Stauchanlage zwischen dem oder den Zerfaserungselementen (10) der ersten Produktionslinie und der Pendelablage (22) umfasst, die angepasst ist, um die ersten Mineralfasern zu crimpen, bevor auf ihnen die zweiten Mineralfasern abgelegt werden, und/oder stromabwärts der Pendelablage (22), die angepasst ist, um die ersten Mineralfasern, auf denen zweite Mineralfasern abgelegt sind, zu crimpen.

4. Anlage nach einem der Ansprüche 1 bis 3, die außerdem einen Wärmeschrank umfasst, der angepasst ist, um die ersten Mineralfasern, auf denen die zweiten Mineralfasern abgelegt sind, zu empfangen.

5. Anlage nach einem der Ansprüche 1 bis 4, wobei jedes Zerfaserungselement (10, 20) mindestens einer der Produktionslinien (1, 2) Folgendes umfasst:
- einen internen Zentrifugierteller, der angepasst ist, um seine Symmetrieachse, die im Wesentlichen vertikal ist, zu drehen, und dessen Umfangsband mit einer Vielzahl von Öffnungen durchbohrt ist,
- einen ringförmigen Brenner, der angepasst ist, um ein Gasziehen bei hoher Temperatur an dem Ausgang der Öffnungen des Zentrifugiertellers auszuführen,
- optional einen Blaskranz, der angepasst ist, um die Fasern zu einer ersten oder zweiten Fördermatte (11, 21) zu kanalisieren,
- optional einen Sprühbeleimungskranz, der angepasst ist, um eine Beleimungszusammensetzung auf die Fasern zu sprühen, bevor sie die erste oder zweite Fördermatte (11, 21) erreichen.

6. Anlage nach einem der Ansprüche 1 bis 5, wobei die Pendelablage (22) eine vertikale oder horizontale Pendelablage ist.

7. Anlage nach einem der Ansprüche 1 bis 6, wobei die erste und die zweite Produktionslinie (1, 2) zueinander im Wesentlichen senkrecht sind.

8. Verfahren zur Herstellung eines wärme- und/oder schallisolierenden Produkts auf Mineralwollebasis, das die folgenden Schritte umfasst:
- Fertigung erster Mineralfasern auf einer ersten Produktionslinie (1) durch mindestens ein Zerfaserungselement (10),
- Fertigung zweiter Mineralfasern auf einer zweiten Produktionslinie (2) durch mindestens ein Zerfaserungselement (20),
- Durchlaufen der zweiten Mineralfasern in einer Pendelablage (22), der nur auf der zweiten Produktionslinie (2) vorhanden ist,
- Ablegen durch Legen der zweiten Mineralfasern durch die Pendelablage (22) auf den ersten Mineralfasern.

9. Verfahren nach Anspruch 8, das außerdem einen Schritt des Durchlaufens in einer Stauchanlage der ersten Mineralfasern allein und/oder der ersten Mineralfasern, auf welchen die zweiten Mineralfasern abgelegt sind, umfasst.

10. Verfahren nach Anspruch 8 oder 9, das außerdem einen Schritt des Durchlaufens der ersten Mineralfasern, auf welchen die zweiten Mineralfasern abgelegt sind, in einem Wärmeschrank umfasst.

## Claims

1. An installation for manufacturing a thermal and/or acoustic insulation product based on mineral wool, comprising:
- a first line (1) for the production of first mineral fibers, comprising at least one fiberizing member (10),
- a second line (2) for the production of second mineral fibers, comprising at least one fiberizing member (20) and a cross-lapping device (22),
the cross-lapping device (22) being present only on the second production line and being adapted to deposit the second mineral fibers onto the first mineral fibers by cross-lapping.

2. The installation as claimed in claim 1, in which the first production line (1) and/or the second production line (2) each comprises at least two fiberizing members (10, 20), the different members (10, 20) on each production line (1, 2) being arranged in series.

3. The installation as claimed in claim 1 or 2, further comprising a crimping machine, positioned between the one or more fiberizing members (10) of the first production line and the cross-lapping device (22), adapted to crimp the first mineral fibers before they are overlaid by the second mineral fibers, and/or downstream of the cross-lapping device (22), adapted to crimp the first mineral fibers overlaid by the second mineral fibers.

4. The installation as claimed in one of claims 1 to 3, further comprising a drying oven adapted to receive the first mineral fibers overlaid by the second mineral fibers.

5. The installation as claimed in one of claims 1 to 4, in which each fiberizing member (10, 20) of at least one of the production lines (1, 2) comprises:
- an internal centrifugation spinner adapted to rotate about its substantially vertical axis of symmetry, the peripheral band of which is perforated by a plurality of orifices,
- an annular burner adapted to perform gaseous stretching at high temperature at the exit from the orifices of the centrifugation spinner,
- optionally, a blowing ring adapted to channel the fibers towards a first or second conveyor belt (11, 21),
- optionally, a gluing ring adapted to spray a binding compound onto the fibers before they reach the first or the second conveyor belt (11, 21) .

6. The installation as claimed in one of claims 1 to 5, in which the cross-lapping device (22) is a vertical or horizontal cross-lapping device.

7. The installation as claimed in one of claims 1 to 6, in which the first and second production lines (1, 2) are substantially perpendicular to each other.

8. A method for manufacturing a thermal and/or acoustic insulation product based on mineral wool, comprising the following stages:
- manufacture of first mineral fibers on a first production line (1) by at least one fiberizing member (10),
- manufacture of second mineral fibers on a second production line (2) by at least one fiberizing member (20),
- passage of the second mineral fibers into a cross-lapping device (22), that is present only on the second production line,
- deposition by cross-lapping of the second mineral fibers onto the first mineral fibers by the cross-lapping device (22).

9. The method as claimed in claim 8, further comprising a stage of passage into a crimping machine of the first mineral fibers on their own and/or of the first mineral fibers overlaid by the second mineral fibers.

10. The method as claimed in claim 8 or 9, further comprising a stage of passage of the first mineral fibers overlaid by the second mineral fibers into a drying oven.
